# FASCICULE DE BREVET EUROPEEN

(11) **EP 1 628 034 B1**
(45) Date de publication et mention de la délivrance du brevet: **25.07.2007**
(21) Numéro de dépôt: 05017552.0
(22) Date de dépôt: 12.08.2005
(51) Int. Cl.: F16D 65/10

(54) **Tambour muni de moyens de ventilation, et frein muni d'un tel tambour**
Ventilierte Bremstrommel und Bremse mit ventilierter Trommel
Ventilated brake drum and brake including such a drum

(30) Priorité: 20.08.2004 FR 0409018
(43) Date de publication de la demande: 22.02.2006
(73) Titulaire: ROBERT BOSCH GMBH, 70442 Stuttgart (DE)
(72) Inventeur: Cazenave, Franck, 60300 Senlis (FR); Bugada, Olivier, 75012 Paris (FR); Luu, Gérard, 93160 Noisy Le Grand (FR)
(74) Mandataire: Hurwic, Aleksander Wiktor

(56) Documents cités:
- FR-A- 2 836 531
- US-A- 2 059 170
- US-A- 2 070 847
- US-A- 5 964 323
- PATENT ABSTRACTS OF JAPAN vol. 010, no. 059 (M-459), 8 mars 1986 (1986-03-08) & JP 60 205030 A (HITACHI KENKI KK), 16 octobre 1985 (1985-10-16)

## Description

L'invention a pour objet un tambour pour frein à tambour pour véhicule automobile. Plus précisément, l'invention a pour objet un tambour muni de moyens de ventilation. De tels moyens de ventilation peuvent se révéler nécessaires pour dissiper rapidement la chaleur créée à l'endroit du tambour lors d'un freinage. L'invention a également pour objet un frein muni d'un tel tambour.

Un but de l'invention est de fournir un tambour muni de moyens de ventilation de réalisation simple. Un autre but de l'invention est de fournir un frein à tambour muni de moyens de ventilation efficaces, mais dont un poids total est peu élevé. Un but supplémentaire de l'invention est de diminuer un coût de fabrication d'un tambour muni de moyens de ventilation.

Un frein à tambour est généralement muni d'un flasque, ou plateau, fixé au moyeu d'une roue, d'un tambour disposé à l'intérieur de la roue et d'un cylindre de frein fixé au flasque. Le tambour est circulaire et est en mouvement avec la roue. Deux segments sont montés entre la flasque et le tambour. Les deux segments suivent le contour du tambour. Les segments sont en arc-de-cercle, et sont disposés à l'intérieur du tambour de la roue. Une extrémité du premier segment est en appui sur un premier piston d'un cylindre de frein, tandis qu'une extrémité du second segment est en appui sur un second piston opposé au premier piston dudit cylindre de frein. Chaque segment est muni, sur une face externe, d'une garniture. Par face externe d'un segment, on entend face dirigée vers la paroi interne du tambour.

Lors d'un freinage, une commande de frein, par exemple une pédale de frein, actionne le cylindre de frein. Les pistons du cylindre de frein repoussent les segments contre la paroi interne du tambour. Les garnitures se trouvent alors en contact avec la paroi interne du tambour. Un frottement des garnitures contre le tambour s'oppose à la rotation du tambour. Un freinage du véhicule a alors lieu. A la fin du freinage, le rappel des segments en position repos se fait, par exemple, par un ressort de rappel. Par position repos, on entend position dans laquelle les segments ne sont pas écartés. Les segments s'éloignent de la paroi interne du tambour. Les garnitures ne frottent plus contre le tambour. Le freinage est terminé.

Pendant le freinage, le frottement des garnitures contre la paroi interne du tambour est à l'origine d'une création de chaleur. Il est nécessaire que cette chaleur puisse être évacuée depuis l'intérieur du tambour vers l'extérieur.

En effet, si la chaleur ne peut pas se dissiper, ou se dissipe mal, le tambour tend à se dilater sous l'effet de l'augmentation de la température à l'intérieur dudit tambour. Le rayon de courbure des garnitures ne correspond plus alors au rayon de courbure de la paroi interne du tambour. Lors des freinages suivants, le contact entre les garnitures et la paroi interne du tambour n'est plus uniforme, certaines zones des garnitures étant plus en contact que d'autres avec la paroi interne du tambour. Le freinage peut ne pas donner entière satisfaction, et l'usure des garnitures est irrégulière.

Par ailleurs, la surchauffe, et l'usure elle même des garnitures sont alimentées par ce phénomène. En effet, les zones des garnitures les plus en contact avec la paroi interne sont les plus soumises à la surchauffe. Cette surchauffe entraînant une dilatation locale encore supérieure, l'usure de ces zones des garnitures tend à croître.

Outre le fait qu'il est alors nécessaire de changer fréquemment les garnitures d'un tel frein à tambour, ce phénomène de surchauffe peut également être à l'origine de mauvais freinages, puisque le contact entre les garnitures et la paroi interne du tambour est irrégulier.

Pour remédier à cet inconvénient de surchauffe dans le frein à tambour, il est connu par le document FR 2 836 531 de réaliser un frein à tambour muni de moyens de ventilation. Les moyens de ventilation comportent une série d'ailettes courbes disposées sur toute une hauteur d'une paroi externe du tambour. Par hauteur de la paroi externe du tambour, on entend la dimension de ladite paroi s'étendant parallèlement à un axe de rotation de la roue portant le tambour. Par ailette courbe, on entend une ailette ayant un rayon de courbure à l'endroit d'une zone de contact entre l'ailette et la paroi externe du tambour. On augmente ainsi une surface de déperdition dans le frein à tambour. Une telle solution permet de créer un effet de ventilation. Par ailleurs, selon l'orientation des ailettes, et plus précisément de leurs rayons de courbure, il est possible de diriger l'air depuis l'intérieur du tambour vers l'extérieur.

Ces ailettes, appelées généralement ailettes turbines, permettent d'optimiser une dissipation de la chaleur calorifique présente dans le frein à tambour lors d'un freinage.

Généralement, on réalise en une unique pièce le tambour, un anneau extérieur, entourant le tambour, et les ailettes solidaires du tambour et de l'anneau extérieur. En effet, il est connu que la dissipation de la chaleur se fait plus rapidement dans une pièce monobloc que dans une pièce en plusieurs parties liées entre elles.

La réalisation d'un frein comportant des ailettes turbines est complexe. En effet, du fait des rayons de courbure des ailettes, il est nécessaire, lors du démoulage, de tourner simultanément, et dans des sens opposés les deux parties du moule, pour libérer chaque ailette. Le démoulage est d'autant plus difficile qu'une longueur des ailettes est grande. Par ailleurs, le moule en lui même est complexe, puisqu'il doit être muni d'un noyau et d'un outillage de noyau spécifique afin de permettre le démoulage.

Par ailleurs, avec des ailettes turbines, il est nécessaire de réaliser deux références différentes de freins munis de moyens de ventilation, afin que la ventilation des tambours lors d'un freinage soit aussi efficace sur les roues droites que sur les roues gauches du véhicule. En effet, selon l'orientation du rayon de courbure des ailettes turbines sur la paroi externe du tambour, l'air est ventilé vers l'extérieur ou vers l'intérieur du véhicule. Bien évidemment, la dissipation de la chaleur est optimale lorsque l'air est dirigé vers l'extérieur du véhicule. La réalisation de deux références différentes augmente le coût de fabrication d'un véhicule muni de tels freins à tambour.

Dans l'invention, on cherche à résoudre les problèmes ci-dessus en fournissant un frein à tambour apte à dissiper de manière efficace la chaleur accumulée dans le frein à tambour lors d'un freinage, quelle que soit la roue, droite ou gauche, dans laquelle il est monté, qui soit de conception simple, et de coût de fabrication réduit. Dans l'invention, on cherche également à réaliser un tel frein à tambour dont un poids total est peu élevé.

Pour arriver à ce résultat, on réalise un frein à tambour pouvant être muni d'un anneau extérieur entourant le tambour, et comportant une pluralité d'ailettes disposées sur une paroi externe du tambour, les ailettes étant disposées en quinconce. C'est-à-dire que les ailettes sont disposées de manière alternée, ou en zigzag, sur la paroi externe du tambour. Une ailette sur deux est solidaire de la paroi externe du tambour à l'endroit d'une première demi-hauteur de ladite paroi, tandis que les autres ailettes sont elles solidaire de la paroi externe du tambour à l'endroit de la seconde demi-hauteur de la paroi externe du tambour. Ainsi, une circulation de l'air depuis l'intérieur dù tambour vers l'extérieur se fait en biais. Une telle disposition des ailettes permet dans tous les cas d'évacuer l'air depuis l'intérieur du tambour vers l'extérieur du véhicule. Une seule référence est donc utilisée pour les roues des deux côtés du véhicule.

Dans un exemple de réalisation particulier de l'invention, on réalise des arêtes arrondies à l'endroit d'une liaison entre les ailettes et la paroi extérieure du tambour. C'est-à-dire qu'une quantité de matière à l'endroit de la liaison entre les arêtes et le tambour est supérieure à une quantité de matière à l'endroit de la liaison entre les arêtes et l'anneau extérieur. Ce surplus de quantité de matière se traduit par une sur-épaisseur locale sur la paroi extérieur du tambour. Ainsi, on augmente la rigidité du tambour. Il est alors possible de diminuer l'épaisseur du tambour. Par épaisseur du tambour, on entend la dimension perpendiculaire à l'axe de rotation de la roue munie dudit frein à tambour. Le poids total du tambour peut ainsi être diminué.

L'invention a donc pour objet un tambour comprenant une série d'ailettes solidaires d'une paroi externe du tambour, une hauteur de cette paroi s'étendant parallèlement à un axe de rotation du tambour,
caractérisé en ce qu'une implantation des ailettes est alternée sur la paroi externe du tambour, à partir des extrémités opposées de la hauteur de ladite paroi.

Le tambour de l'invention peut également comporter tout ou parties des caractéristiques suivantes :
- une largeur des ailettes s'étend parallèlement à l'axe de rotation du tambour et est strictement inférieure à la hauteur de la paroi externe du tambour;
- la largeur des ailettes est sensiblement égale à la moitié de la hauteur de la paroi externe du tambour ;
- le tambour est muni d'un anneau extérieur entourant ledit tambour, une première extrémité des ailettes étant solidaire de la paroi externe du tambour et une deuxième extrémité des ailettes étant solidaire de l'anneau extérieur.
- les ailettes sont droites ;
- une liaison entre une première extrémité des ailettes et le tambour est évasée;
- une épaisseur du tambour s'étend dans une direction perpendiculaire à l'axe de rotation du tambour, et est inférieure à une épaisseur de l'anneau extérieur, l'épaisseur de l'anneau extérieur s'étendant dans une direction perpendiculaire à l'axe de rotation du tambour.

L'invention a également pour objet un frein à tambour muni d'un tel tambour. Dans un exemple particulier de réalisation du frein à tambour, ledit frein est muni d'un ensemble monobloc comportant le tambour, un anneau extérieur et la série d'ailettes ;

L'invention sera mieux comprise à la lecture de la description qui suit et à l'examen des figures qui l'accompagnent. Celles-ci sont présentées à titre indicatif et nullement limitatif de l'invention. Les figures montrent:
- Figure 1 : Une représentation schématique d'un frein à tambour selon un exemple de réalisation de l'invention ;
- Figure 2 : Une représentation schématique d'un ensemble monobloc comportant un tambour, des ailettes et un anneau extérieur selon un exemple de réalisation de l'invention ;
- Figure 3 : Une représentation partielle d'un ensemble monobloc selon un autre exemple de réalisation ;
- Figure 4 : Une représentation schématique en coupe selon un plan parallèle à l'axe de rotation de la roue, d'une paroi extérieure d'un tambour de l'invention ;
- Figure 5 : Une représentation partielle en coupe selon un plan parallèle à l'axe de rotation de la roue, d'un moule apte à réaliser un frein de l'invention.

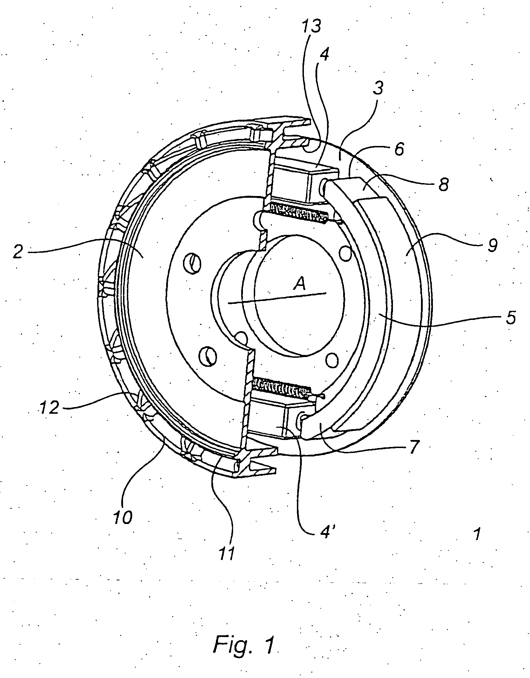

Sur la figure 1 est représenté un frein à tambour 1 muni d'un tambour 2. Un flasque 3 porte deux cylindres de frein 4 et 4', disposés de part et d'autre d'un diamètre dudit flasque 3. Deux segments 5 (un seul visible sur la figure 1) sont en appui par une première extrémité 6 contre un boîtier du premier cylindre de frein 4 et par une deuxième extrémité 7 contre un boîtier du deuxième cylindre de frein 4'. Chaque segment 5 est muni sur une face extérieure 8 d'une garniture 9. Les segments 5 sont en arc de cercle, de manière à suivre le contour circulaire interne du tambour 2. Les segments 5 sont disposés entre le flasque 3 et le tambour 2. Bien évidemment, il est possible que les segments 5 soient articulés par un unique cylindre de frein 4 ou 4'. Le deuxième cylindre de frein 4 ou 4' peut alors être remplacé par une articulation.

Sur la figure 1, on peut voir que le frein à tambour 1 est également muni d'un anneau extérieur 10. L'anneau extérieur 10 a un rayon de courbure qui suit un rayon de courbure du tambour 2. Entre l'anneau extérieur 10 et une paroi externe 11 du tambour 2 est disposée une série d'ailettes 12. Par paroi externe 11 du tambour 2, on entend paroi dirigée vers la roue de véhicule dans laquelle il est monté, par opposition à une paroi interne 13 dudit tambour 2, dirigée vers les segments 5 et les garnitures 9.

Dans un exemple de réalisation différent de l'invention, on peut prévoir de supprimer l'anneau extérieur 10.

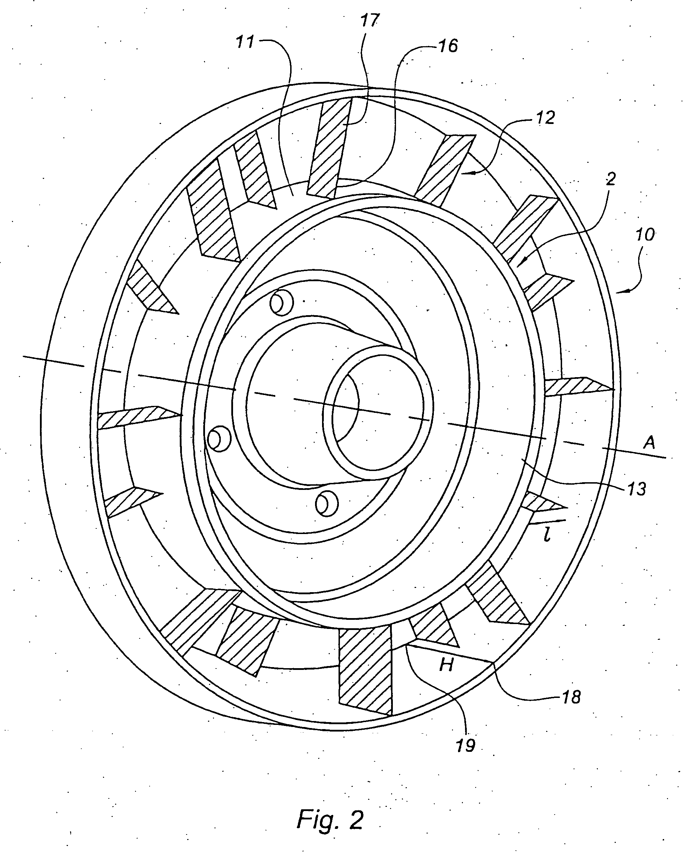

Sur la figure 2, est représenté plus en détail le tambour 2 de l'invention, l'anneau extérieur 10 et la série d'ailettes 12. Ainsi on peut voir, conformément à l'invention, que la série d'ailettes 12 comporte des ailettes implantées de manière alternée sur la paroi externe 11 du tambour 2. Une hauteur H de la paroi externe 11 du tambour 2 comporte une extrémité interne 18, destinée à être dirigée vers l'intérieure du véhicule, et une extrémité externe 19. Une ailette 12 sur deux à une implantation débutant à l'endroit de l'extrémité interne 18 de la hauteur H de la paroi externe 11 du tambour 2, tandis qu'une ailette 12 sur deux, a elle une implantation débutant à l'endroit de l'extrémité externe 19 de la hauteur H de la paroi externe 11 du tambour 2. Une largeur l des ailettes 12 étant strictement inférieure à la hauteur H de la paroi externe 11 du tambour 2, l'implantation en zigzag impose à l'air de se séparer lorsqu'il rencontre les ailettes en entrant dans le tambour 2, créant une ventilation. Par largeur l d'une ailette 12, on entend la dimension de l'ailette 12 qui s'étend parallèlement à l'axe de rotation A du tambour 2.

Sur la figure 4, on peut voir de manière plus schématique la disposition alternée des ailettes 12. En effet, les ailettes 12 ont par exemple une largeur l correspondant à la moitié de la hauteur H du disque externe 10 ou du tambour 2.

Dans l'exemple de réalisation représenté aux figures 2 et 4, les ailettes 12 sont des ailettes droites, c'est-à-dire dépourvues de rayon de courbure. Les ailettes sont par exemple formées d'une plaque plate, c'est à dire dont une section selon un plan perpendiculaire à l'axe A de rotation à un profil rectangulaire. Une telle forme des ailettes 12, du fait de leur disposition alternée sur le tambour 2 donne de bons résultats quant à la ventilation du frein à tambour 1.

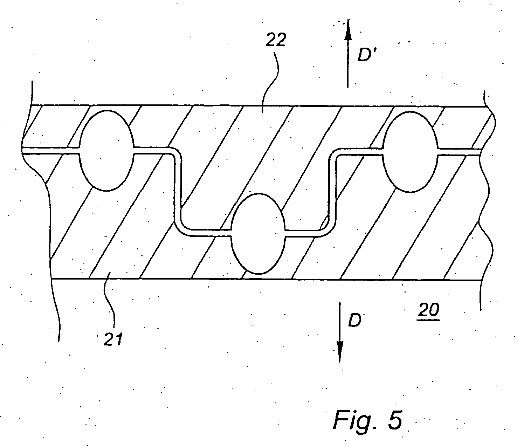

Le frein à tambour 1 muni d'un ensemble monobloc comportant au moins le tambour 2, l'anneau extérieur 10 et la série d'ailettes 12 droites est de réalisation aisée. Sur la figure 5, on peut voir une coupe schématique partielle d'un moule 20 permettant de réaliser un ensemble monobloc 2, 10, 12 de l'invention. Le moule 2 est en deux parties 21 et 22, dont des bords de découpes sont tels qu'une fois le moulage réalisé, les parties 21 et 22 sont séparées par éloignement l'une de l'autre dans des directions D et D' opposées et parallèles entre elles. Il est possible de démouler simultanément ou en deux fois les parties de l'ensemble monobloc 2, 10, 12 moulées dans les parties 21 et 22 du moule 20.

Par ailleurs un tel ensemble monobloc 2, 10, 12, dans lequel les ailettes 12 sont des ailettes droites, permet de réaliser une unique référence de frein à tambour 1 apte à être montée indifféremment sur des roues droites et des roues gauches d'un véhicule automobile, et cela avec une même efficacité de ventilation.

Dans un autre exemple de réalisation de l'invention, on peut prévoir d'utiliser des ailettes 12 munies d'un rayon de courbure. C'est à dire que les ailettes 12 sont par exemple formées d'une plaque dont une section selon un plan perpendiculaire à l'axe A à un profil en arc de cercle.

Il est également possible de réaliser un frein à tambour 1 muni d'ailettes droites et d'ailettes courbées, disposées par exemple en alternance sur la paroi externe 11 du tambour 2.

Cependant, ces solutions peuvent s'avérer plus complexes à réaliser, notamment si l'on souhaite réaliser un ensemble monobloc comportant le tambour 2, l'anneau extérieur 10 et les ailettes 12. Par ailleurs, il est dans ces deux cas nécessaire de réaliser à chaque fois deux références différentes, l'une pour être montée sur les roues situées du côté droit du véhicule et l'autre pour être montée sur les roues situées du côté gauche dudit véhicule.

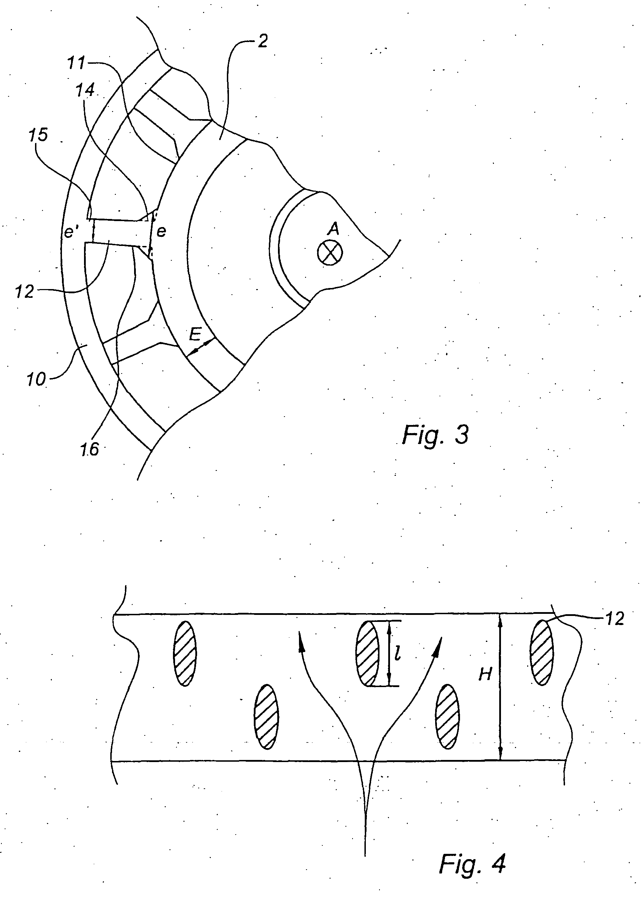

Dans un exemple de réalisation particulier de l'invention, et comme cela est représenté sur la figure 3, une liaison 14 entre une ailette 12 et la paroi extérieure 11 du tambour 2 est formée par une sur-épaisseur 14. C'est-à-dire qu'une épaisseur e de l'ailette 12 à l'endroit de la liaison 14 entre l'ailette 12 et le tambour 2 est supérieure à une épaisseur e' de ladite ailette 12 à l'endroit de la liaison 15 entre ladite ailette 12 et l'anneau extérieur 10. Par épaisseur e ou e' de l'ailette 12, on entend la dimension de l'ailette qui s'étend dans un plan parallèle à un plan moyen de la paroi externe 11 du tambour 2 à l'endroit de la liaison 14. Une telle liaison 14 munie d'une arête arrondie permet d'augmenter la rigidité du tambour 2.

De plus, du fait de cet ajout de quantité de matière à l'endroit de la liaison 14, il est possible de diminuer une épaisseur E du tambour 2, tout en gardant une raideur de tambour suffisante. Par épaisseur E, on entend la dimension du tambour 2 perpendiculaire à l'axe de rotation A. Ainsi, le poids total du frein à tambour 1, muni de tels moyens de ventilation, n'est pas pénalisé par son poids, puisque l'ajout de matière dû à la présence des ailettes, et éventuellement de l'anneau extérieur 10, est partiellement compensé par la diminution de quantité de matière à l'endroit du tambour 2.

## Revendications

1. Tambour (2) pour frein (1) comprenant une série d'ailettes (12) solidaires d'une paroi externe (11) du tambour, une hauteur (H) de cette paroi s'étendant parallèlement à un axe (A) de rotation du tambour,
**caractérisé en ce qu'**une implantation des ailettes est alternée sur la paroi externe du tambour, à partir des extrémités opposées (18, 19) de la hauteur de ladite paroi.

2. Tambour selon la revendication 1, **caractérisé en ce qu'**une largeur (l) des ailettes s'étend parallèlement à l'axe de rotation du tambour et est strictement inférieure à la.hauteur de la paroi externe du tambour.

3. Tambour selon la revendication 2, **caractérisé en ce que** la largeur des ailettes est sensiblement égale à la moitié de la hauteur de la paroi externe du tambour.

4. Tambour selon l'une quelconque des revendications 1 à 3, **caractérisé en ce qu'**il est muni d'un anneau extérieur (10), ledit anneau extérieur entourant le tambour, une première extrémité (16) des ailettes étant solidaire de la paroi externe du tambour et une deuxième extrémité (17) des ailettes étant solidaire de l'anneau extérieur.

5. Tambour selon la revendication 4, **caractérisé en ce qu'**une épaisseur (E) du tambour s'étend dans une direction perpendiculaire à l'axe de rotation du tambour, et est inférieure à une épaisseur de l'anneau extérieur, l'épaisseur de l'anneau extérieur s'étendant dans une direction perpendiculaire à l'axe de rotation du tambour.

6. Tambour selon l'une des revendications 1 à 5, **caractérisé en ce que** les ailettes sont droites.

7. Tambour selon l'une des revendications 1 à 6, **caractérisé en ce qu'**une liaison (14) entre une première extrémité (16) des ailettes et le tambour est évasée.

8. Frein à tambour **caractérisé en ce qu'**il est muni d'un tambour selon l'une des revendications 1 à 7.

9. Frein à tambour selon la revendication 8, **caractérisé en ce qu'**il est muni d'un ensemble monobloc (2, 10, 12) comportant le tambour, un anneau extérieur (10) et la série d'ailettes.

## Claims

1. Drum (2) for a brake (1) comprising a series of fins (12) secured to an external wall (11) of the drum, a height (H) of this wall running parallel to an axis (A) of rotation of the drum,
**characterized in that** an installation of the fins is alternated on the external wall of the drum, from opposite ends (18, 19) of the height of said wall.

2. Drum according to Claim 1, **characterized in that** a width (1) of the fins runs parallel to the axis of rotation of the drum and is strictly shorter than the height of the external wall of the drum.

3. Drum according to Claim 2, **characterized in that** the width of the fins is more or less equal to half the height of the external wall of the drum.

4. Drum according to any one of Claims 1 to 3, **characterized in that** it is equipped with an outer annulus (10), said outer annulus surrounding the drum, a first end (16) of the fins being secured to the external wall of the drum and a second end (17) of the fins being secured to the outer annulus.

5. Drum according to Claim 4, **characterized in that** a thickness (E) of the drum extends in a direction perpendicular to the axis of rotation of the drum and is shorter than a thickness of the outer annulus, the thickness of the outer annulus running in a direction perpendicular to the axis of rotation of the drum.

6. Drum according to one of Claims 1 to 5, **characterized in that** the fins are straight.

7. Drum according to one of Claims 1 to 6, **characterized in that** a connection (14) between a first end (16) of the fins and the drum is flared.

8. Drum brake **characterized in that** it is equipped with a drum according to one of Claims 1 to 7.

9. Drum brake according to Claim 8, **characterized in that** it is equipped with a one-piece assembly (2, 10, 12) comprising the drum, an outer annulus (10) and the series of fins.

## Patentansprüche

1. Trommel (2) für eine Bremse (1), mit einer Reihe von Stegen (12), die mit einer Außenwand (11) der Trommel fest verbunden sind, wobei eine Höhe (H) dieser Wand sich parallel zu einer Drehachse (A) der Trommel erstreckt,
**dadurch gekennzeichnet, dass** die Stege abwechselnd ausgehend von gegenüberliegenden Enden (18, 19) der Höhe der Wand an der Außenwand der Trommel angeordnet sind.

2. Trommel nach Anspruch 1, **dadurch gekennzeichnet, dass** eine Breite (I) der Stege sich parallel zur Drehachse der Trommel erstreckt und kleiner ist als die Höhe der Außenwand der Trommel.

3. Trommel nach Anspruch 2, **dadurch gekennzeichnet, dass** die Breite der Stege im Wesentlichen der Hälfte der Höhe der Außenwand der Trommel entspricht.

4. Trommel nach einem der Ansprüche 1 bis 3, **dadurch gekennzeichnet, dass** sie mit einem Außenring (10) versehen ist, wobei der Außenring die Trommel umgibt, ein erstes Ende (16) der Stege mit der Außenwand der Trommel fest verbunden ist und ein zweites Ende (17) der Stege mit dem Außenring fest verbunden ist.

5. Trommel nach Anspruch 4, **dadurch gekennzeichnet, dass** eine Dicke (E) der Trommel sich in eine zur Drehachse der Trommel senkrechte Richtung erstreckt und kleiner ist als eine Dicke des Außenrings, wobei die Dicke des Außenrings sich in eine zur Drehachse der Trommel senkrechte Richtung erstreckt.

6. Trommel nach einem der Ansprüche 1 bis 5, **dadurch gekennzeichnet, dass** die Stege geradlinig sind.

7. Trommel nach einem der Ansprüche 1 bis 6, **dadurch gekennzeichnet, dass** eine Verbindung (14) zwischen einem ersten Ende (16) der Stege und der Trommel aufgeweitet ist.

8. Trommelbremse, **dadurch gekennzeichnet, dass** sie mit einer Trommel nach einem der Ansprüche 1 bis 7 ausgestattet ist.

9. Trommelbremse nach Anspruch 8, **dadurch gekennzeichnet, dass** sie mit einer einstückigen Baugruppe (2, 10, 12) ausgestattet ist, die die Trommel, einen Außenring (10) und die Reihe von Stegen umfasst.
